(19) Europäisches Patentamt
European Patent Office
Office européen des brevets

(11) **EP 2 375 230 A1**

(12) **EUROPEAN PATENT APPLICATION**

(43) Date of publication:
**12.10.2011 Bulletin 2011/41**

(51) Int Cl.:
***G01J 3/46*** (2006.01)

(21) Application number: **10290194.9**

(22) Date of filing: **09.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Thomson Licensing
92130 Issy-les-Moulineaux (FR)**

(72) Inventors:
• **Sarkar, Abhijit
92443 Issy-Les-Moulineaux (FR)**
• **Blonde, Laurent
92443 Issy-Les-Moulineaux (FR)**
• **Stauder, Jürgen
92443 Issy-Les-Moulineaux (FR)**

(74) Representative: **Browaeys, Jean-Philippe
Technicolor
1-5 rue Jeanne d'Arc
92130 Issy-les-Moulineaux (FR)**

(54) **Method for controlling an image display device to allow the same perception of colours over a large variety of observers**

(57) For each colour, the method comprises the following steps :
- converting the first set of colour coordinates $(R_0, G_0, B_0)^R$ representing this colour into a first set of visual tristimulus values $(X_0, Y_0, Z_0)$ representing said colour as perceived by a first observer when displayed using a first set of primaries,
- converting said first set of visual tristimulus values $(X_0, Y_0, Z_0)$ into a second set of visual tristimulus values $(X_i, Y_i, Z_i)$ representing the same colour as perceived by a second observer,
- converting said second set of visual tristimulus values $(X_i, Y_i, Z_i)$ into a second set of colour coordinates $(R_i, G_i, B_i)^C$ representing said colour as perceived by said second observer when displayed using a second set of primaries.

Fig.9

**Description**

The invention relates to a method for controlling an image display device to allow the same perception of colours over a large variety of observers.

Various recent studies have shown that variations in observers' colour vision characteristics can be a significant issue in modern display colourimetry, since peaky colour primaries (commonly red, green and blue) are often used to achieve more vivid and saturated colours.

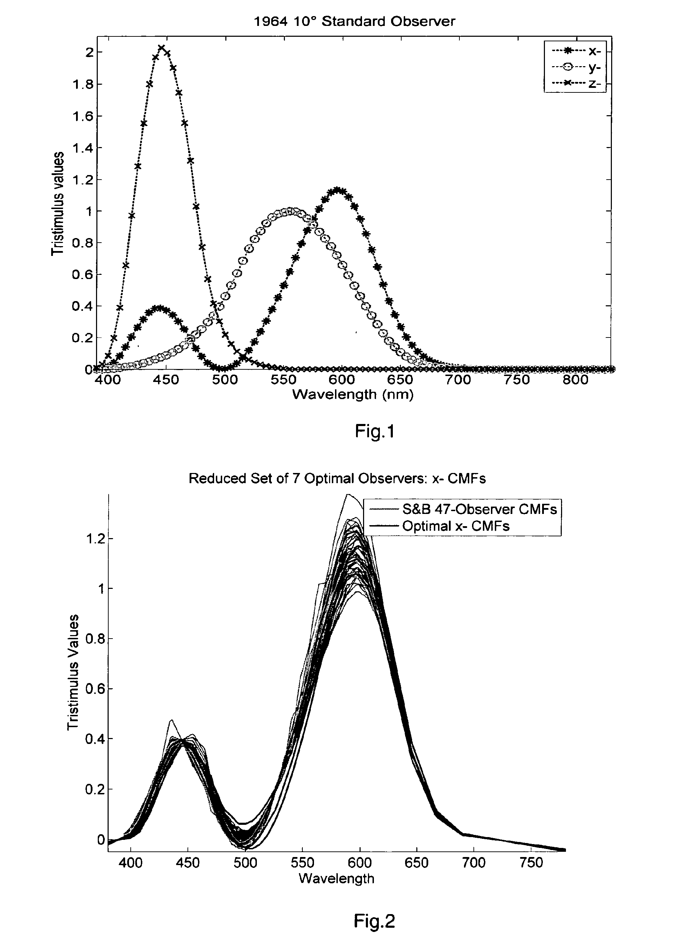

The colour matching functions are very well known as the numerical description of the chromatic response of an observer. The CIE has defined a set of three colour-matching functions (CMF"), called $\overline{x}(\lambda)$, $\overline{y}(\lambda)$, and $\overline{z}(\lambda)$, which can be thought of as the spectral sensitivity curves of three linear light detectors that yield the tristimulus values X, Y, and Z in the CIE XYZ linear visual colour space. There are two sets of standard observer CMFs, depending on the field of view : CIE-1964 10˚ or CIE-1931 2˚. As illustrated on figure 1 for CIE-1964 10˚, these three CMF functions are respectively for the long-, medium- and short- wavelength range.

According to basic colorimetry, the tristimulus values (X,Y,Z) as expressed in the CIE-XYZ color space, of a color of an object as perceived by a standard observer are obtained by the integration of the spectral power distribution of a standard light source ($S_\lambda$), the reflectance factor of the object ($R_\lambda$), and the color matching functions of an average, standard observer ($x\lambda$, $y\lambda$ and $z\lambda$). If k is a normalization factor that assigns the luminance of white an arbitrary value of 100, we have the following definitions :

$$X = k\sum_\lambda S_\lambda R_\lambda \overline{x}_\lambda \Delta\lambda; \quad Y = k\sum_\lambda S_\lambda R_\lambda \overline{y}_\lambda \Delta\lambda; \quad Z = k\sum_\lambda S_\lambda R_\lambda \overline{z}\lambda\Delta\lambda$$

$$k = \frac{100}{\sum_\lambda S_\lambda \overline{y}_\lambda \Delta\lambda}$$

Since the tristimulus values (X,Y,Z) are computed by wavelength-wise integration, two colour tristimuli with very different spectral power distribution can give rise to identical visual response for a given observer, leading to a "metameric" colour match. Such a match established by one observer can, and quite often does, lead to a mismatch for a different observer, as the second observer is visually characterized by a set of CMFs that is different from the former. This phenomenon is commonly termed as observer metamerism.

Various recent studies have shown that observer variability can be a significant issue notably in modern display colourimetry. This single set of three CMFs can often be unacceptably different from individual and average observer matches, and vice versa. In recent studies, the mean and maximum values of the standard observer-predicted colour difference between individual observer colour matches were found to be as high as 1.4 and 3.3 $\Delta E^*_{00}$ respectively, as expressed in the Lab color space.

The relevance of the observer variability is obviously quite dependent on the application context. The topic of observer metamerism has sparked renewed interest in the recent years with the proliferation of wide colour-gamut image display devices. Whether based on LED (Light Emitting Diode) or employing laser primaries, all these image display devices compete with each other in achieving more vivid, more saturated and brighter colours: see Ramanath R. (2009), "Minimizing Observer Metamerism in Display System", Colour Res. & Appl., 34(5): pg. 391-398. See also Fairchild M. D. and Wyble D. R. (2007), "Mean Observer Metamerism and the Selection of Display Primaries", Final Program and Proceedings-IS&T/SID Colour Imaging Conference, pg. 151-156, Albuquerque, NM, USA. On the flipside, these image display devices are particularly susceptible to observer variability since their narrow-band (i.e. peaky spectral characteristics) primaries cause noticeable shift in chromaticities of perceived colours with only relatively minor change in the visual characteristics of the observer.

In 1989, the CIE published a report providing a method for evaluating the average values and the range of colour mismatch for a metameric colour pair when an actual observer with normal colour vision is substituted for the so-called "standard observer" of the CIE. Four sets of deviation functions were proposed to characterize the tolerance ellipsoid of colour mismatch resulting from observer metamerism. This method can be used to derive an observer metamerism index, but it does not attempt to derive new sets of CMFs. Further, this method significantly under-predicts observer variability, and was never adopted by the industry.

In a more recent theoretical analysis disclosed by Sarkar A., Blondé L., Le Callet P., Autrusseau F., Stauder J., Morvan P. (2009), in "Study of Observer Variability on Modern Display Colourimetry: Comparison of CIE 2006 Model and 10° Standard Observer" (Final Program and Proceedings, The 11th Congress of the International Colour Association (AIC) 2009, Sydney, Australia), it was found that the CIE 10° standard observer functions, as well as the average observer functions from a recent physiological model (proposed by CIE in 2006), do not accurately predict real observers' CMFs averaged within various age-groups. Because of this prediction error, colours on a narrow-band, wide-gamut display and a broad-band (smooth spectral characteristics) CRT display (Cathode Ray Tube), which are supposed to be matched based on real observer data and actual display spectral characteristics, were predicted to have significant colourimetric differences. The experimental data used in the study came from the most comprehensive colour matching experiments till date, performed by Stiles and Burch in 1959, on which the CIE 10° standard observer is based. This analysis showed that when it comes to modern image display devices, the issue of observer variability can cause conventional colourimetry to fail being accurate for a wide range of observers having very different CMFs. The extent of this failure will depend on the spectral characteristics of the display, the specific colours that are being reproduced on the image display device, as well as on the CMFs of the observer viewing the image display device.

An aim of the invention is to calibrate an image display device for a specific observer so that colour matches across various image display devices can be improved for a given observer characterized by a specific set of CMFs, even when this observer is not the CIE standard observer, and thus disagreement among individual observers on displayed colour matches can be minimized.

For this purpose, the subject of the invention is a method for displaying a second image of colours using a second set of primaries for a second observer visually characterized by a second set of Colour Matching Functions, each colour being delivered as a first set of colour coordinates allowing to display a first image of said colour by using a first set of primaries, said first displayed image allowing the perception of said colour by a first observer visually characterized by a first set of Colour Matching Functions different from said second set of Colour Matching Functions, said method comprising,

    1) for each colour delivered as a first set of colour coordinates, the following steps :

    -    converting said first set of colour coordinates of said colour into a first set of visual tristimulus values representing said colour as perceived by said first observer when displayed using said first set of primaries,
    -    converting said first set of visual tristimulus values into a second set of visual tristimulus values representing the same colour as perceived by said second observer,
    -    converting said second set of visual tristimulus values into a second set of colour coordinates representing said colour as perceived by said second observer when displayed using said second set of primaries,

    2) displaying said second image of colours by controlling said second set of primaries using said second sets of colour coordinates representing said colours as perceived by said second observer.

Advantageously, the said second observer is assigned to a class of observers, said class being characterized by said second set of Colour Matching Functions.

The invention will be more clearly understood on reading the description which follows, given by way of non-limiting example and with reference to the appended figures in which:

    -    Figure 1, already mentioned, illustrates the well known set of CMFs of the CIE 10° standard observer;
    -    Figures 2, 3 and 4 illustrate seven different sets of CMFs characterizing seven classes of observers cl-1 to cl-7 : figure 2 for the seven x-CMFs, figure 3 for the seven y-CMFs, figure 4 for the seven z-CMFs; the seven reduced sets of CMFs are obtained through a two-step process described in the following pages
    -    Figure 5 shows the spectral power distribution of the three primaries of the CRT and the LCD used respectively as the reference display device and as the test display device in the experimental setup of figure 7;
    -    Figure 6 shows an example of a diagram illustrating an embodiment of a method for the classification of observers;
    -    Figure 7 illustrates an experimental setup that may be used to implement an embodiment of the method for the classification of the observers;
    -    Figure 8 gathers figures 2, 3 and 4 in the same graph, additionally showing the wavelength ranges of high observer variability ;
    -    Figure 9 is a diagram illustrating the method for controlling an image display device according to an embodiment of the invention.

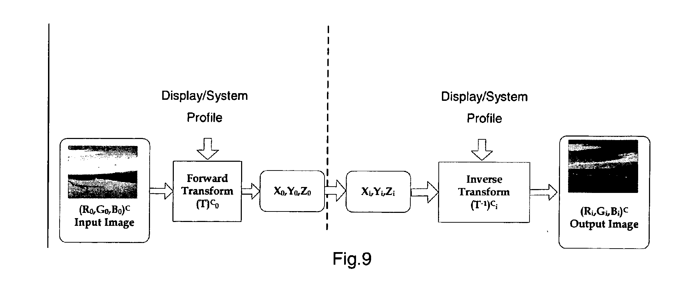

The functions of the various elements shown in the figures, notably figure 9, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. When provided by a software, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU.

1st step : definition of optimal sets of 125 observers, each observer being characterized by a set of 3 CMFS.

By classifying a combined dataset of 47 actual observer CMFs from the 1959 Stiles-Burch study, and 61 simulated CMFs obtained from the more recent CIE 2006 model (i.e. 108 CMFs in all, for a 10° field-of-view) using standard mathematical cluster analysis methods ("Partitioning method", also known as "K-means method"), an optimal number of five different sets of **x-,** y- and z-CMFs, defining 5x5x5 or 125 classes of observers, were found, achieving close to 1 unit of average colour difference prediction error ($\Delta E^*_{00}$) for a standard set of 240 colors, and for 47 Stiles-Burch observers. Instead of having only one standard observer as in the most common prior art, there are now 125 different classes of observers, and each actual observer can be assigned to one of these classes in order to be characterized with the set of CMFs corresponding to this class.

Practically, in the analysis, the total number of variables is 35 (normalized values at 35 wavelengths) and total number of observations is 108. The analysis was performed on LMS cone fundamentals, and the optimal LMS functions were then converted in a manner known per se into CMFs through a 3x3 transformation. A cluster analysis starts with undifferentiated groups and attempts to create clusters of objects (i.e. the CMFs) based on the similarities observed among a set of variables (i.e. CMF values at each wavelength). Variables are selected that maximally discriminate among objects (i.e. the CMFs). Increasing sample sizes result in increased cluster reliability.

The "Partitioning method" (or "K-means method") begins by partitioning the actual data (rather than similarity measures) into a specific number of clusters, and objects are assigned and reassigned in an iterative method to simultaneously minimize intra-cluster variability and maximize inter-cluster variability. This method was used as it is more likely to lead to a robust solution compared to other methods.

In the two-phase computational implementation in Matlab™ software, the first phase used batch updates, in which each iteration consisted of reassigning objects to their nearest cluster centroid, all at once, followed by recalculation of cluster centroids. The second phase used online updates, in which objects were individually reassigned if doing so would reduce the sum of distances, and cluster centroids were recomputed after each reassignment. Each cluster in the partition is defined by its member objects and by its centroid, or center.

Suitable wavelength ranges (i.e. the number of variables) were chosen for L, M and S. Initial cluster centroid locations were selected by dividing 20-80 age range in equal parts and using corresponding CIE-2006 functions. Squared Euclidean distance measure (in LMS space) was used in this analysis. The clustering was repeated 20 times (with same initial cluster centroid positions). Optimal functions were obtained by taking the mean of cluster members.

Each of the derived optimal sets of CMFs was then used to predict 47 Stiles-Burch observer data. The analysis was repeated to derive 3, 4, 5, 6 and 7 optimal sets of CMFs (in each set, one CMF for long-, medium- and short-wavelength range). Based on the accuracy of prediction, as illustrated in Table 1, 5 optimal sets of CMFs was found to be the minimal to meet the goal of achieving close to 1 unit of average colour difference ($\Delta E^*_{00}$) for a wide range of colors, and for all Stiles-Burch observers. With these 5 optimal sets of x-, y- and z- CMFs, there are now 5x5x5, or 125 possible classes of observers. CIELAB colour coordinates were computed for all colour patches of a reference colour chart (as the 240 colour patches of the Colourchecker DC™ reference colour chart) with a CIE illuminant D65, by using i) real Stiles-Burch observer CMF data, ii) CIE 1964 10° standard observer functions and iii) all possible combinations of each of the optimal set of CMFs derived from the above cluster analysis. Then, for each observer, colour differences ($\Delta E^*_{00}$) were computed between the CIELAB values obtained from real observer CMFs [case (i)] and those obtained from the predicted CMFs [case (ii) and (iii)]. Thus for each of the 47 Stiles-Burch observer, average colour difference $\Delta E^*_{00}$ is computed out of the 240 patches. Lower the average colour difference, the better is the model prediction.

Table 1

| CMFs Under Comparison | $\Delta E^*_{00}$ Color Difference w.r.t. Real Observer Data (Averaged Over all 47 Observers) | |
|---|---|---|
| | Average $\Delta E^*_{00}$ for 240 patches | Maximum $\Delta E^*_{00}$ for 240 patches |
| **CIE 1964 10° standard observer** | 0.9 | 2.1 |
| Optimal 3 (total 27) | 0.7 | 1.5 |

(continued)

| CMFs Under Comparison | ΔE*$_{00}$ Color Difference w.r.t. Real Observer Data (Averaged Over all 47 Observers) | |
| --- | --- | --- |
| | Average ΔE*$_{00}$ for 240 patches | Maximum ΔE*$_{00}$ for 240 patches |
| Optimal 4 (total 64) | 0.6 | 1.5 |
| Optimal 5 (total 125) | 0.5 | 1.1 |
| Optimal 6 (total 216) | 0.4 | 0.7 |
| Optimal 7 (total 343) | 0.5 | 1.0 |

Average and maximum values of these colour difference ΔE*$_{00}$ are shown in Table 1. All combinations of a limited number of CMFs (3 to 7) are compared to CIE 1964 10˚ observer (giving respectively $3^3$ = 27 to $7^3$ = 343 total possibilities). Note that for optimal CMF, the combination yielding best result was considered for individual observers (thus, each of the 47 observers had a corresponding best combination). Then the average or the maximum was computed.

2$^{nd}$ step : definition of a reduced number of 7 optimal observers classes, each class being characterized by a set of 3 CMFs:

Out of the above-mentioned 125 possible combinations of CMFs, several combinations can meet the goal of achieving close to 1 unit of average ΔE*$_{00}$ for a given observer, and the said 240 Colorchecker samples. Thus, for the said constraint, fewer than 125 combinations will suffice for covering all the 47 observers. Thus in this 2$^{nd}$ step, an iterative algorithm was implemented to pick the minimal number of combinations satisfying the average ΔE*$_{00}$ criterion for all 47 observers. The algorithm took into consideration that for some observers with very different color vision characteristics, an average ΔE*$_{00}$ value close to 1 may never be achieved. For each observer, a target ΔE*$_{00}$ was established based on statistical percentiles over all 240 patches. The suitability of a given CMF combination for all the 47 observers was determined by a "CMF Performance Index" (PI), based on average percent deviation from target ΔE*$_{00}$ (a positive PI indicated average ΔE*$_{00}$ was lower than the target). A combination for the reduced set was selected based on the highest number of observers with positive PI as well as the largest value of the PI.

Table 2 shows which of the 125 combinations, and their constituent x-, y-, z- functions were picked for the reduced sets of 7 observer classes. 4 x-CMFs, 3 y-CMFs and 3 z-CMFs constitute the reduced sets. Total number of Stiles-Burch observers assigned to each set, as well as cumulative percent of observers covered are listed. For example, combination 2 is made up of 1$^{st}$ x-CMF, 1$^{st}$ y-CMF and 2$^{nd}$ z-CMF, satisfying the aforementioned ΔE*$_{00}$ criterion for 17 observers, which is 36.2% of Stiles-Burch observer pool. Combination 58 satisfies another 14 observers, so combinations 2 and 58 together satisfy 66% of Stiles-Burch observers, so on and so forth. As shown, these combinations were selected in an iterative process, excluding the observers satisfied by the prior combinations in the subsequent iterations.

Table 2

| Combination No | X-CMF No | Y-CMF No | Z-CMF No | Total Obs | Iteration No | %Obs Covered |
| --- | --- | --- | --- | --- | --- | --- |
| 2 | 1 | 1 | 2 | 17 | 1 | 36.2 |
| 58 | 3 | 2 | 3 | 14 | 2 | 66 |
| 6 | 1 | 2 | 1 | 8 | 3 | 83 |
| 33 | 2 | 2 | 3 | 4 | 4 | 91.5 |
| 81 | 4 | 2 | 1 | 2 | 5 | 95.7 |
| 63 | 3 | 3 | 3 | 1 | 6 | 97.9 |
| 76 | 4 | 1 | 1 | 1 | 7 | 100 |
| **Total** | | | **Observers** | **47** | | |

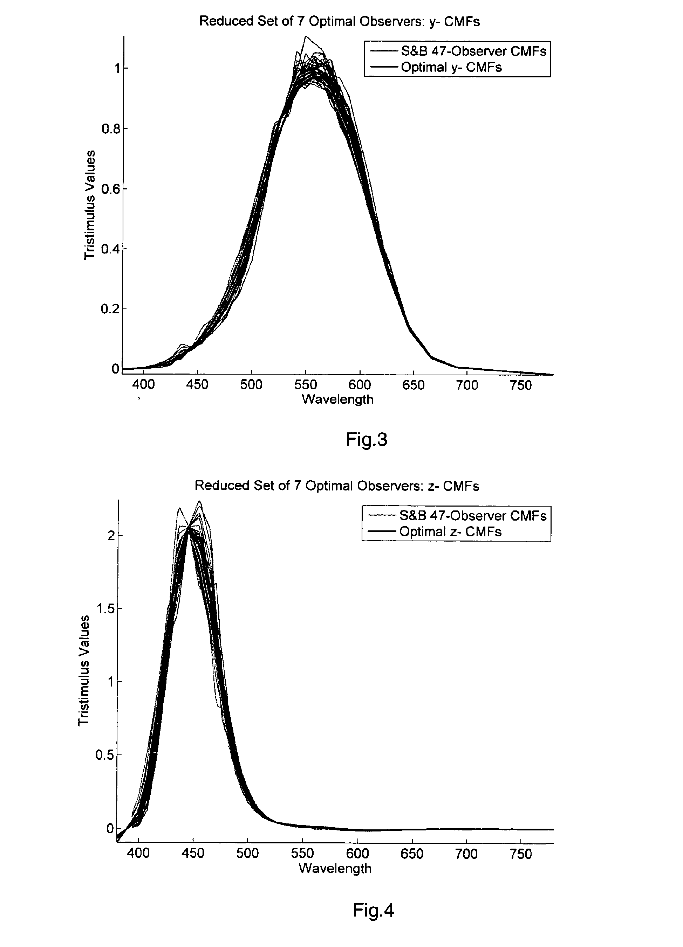

Figures 2, 3 and 4 illustrate these seven optimal sets of CMFs, respectively for 4 x-CMFs, 3 y-CMFs and 3 z-CMFs.

3<u>rd</u> step : method for classifying actual observers over the seven classes of observers, each class being characterized by a set of CMFs.

Based on the above defined seven classes of observers, an embodiment of the method of classification of actual human observers within these seven different classes will now be described.

In order to implement this embodiment, two different image display devices are needed : a reference image display device using a first set of primaries to display images, and a test image display device using a second set of primaries, different from the first one.

To be able to identify differences between colour perception among various observers, according to which, as previously described, one observer with cone spectral sensitivities different from another observer does not have the same color perception as the other observer, the set of primaries of the reference image display device should have a spectral distribution different from the spectral distribution of the set of primaries of the test image display device. For instance, a CRT display device is used for the reference image display device, and an LCD device, preferably with LED backlight, is used as the test image display device.

An example of experimental setup that may be used to implement this embodiment will now be described with more detail.

Example of experimental setup:

- Reference image display device : 32" Sony BVM Cathode Ray Tube (CRT) display, which is widely used as a studio reference display,
- Test image display device : HP DreamColor™ (LP2480zx) Wide-Gamut Liquid Crystal Display (LCD) with LED backlight.

For both image display devices, the luminance of the full white was set close to 97 cd/m$^2$.

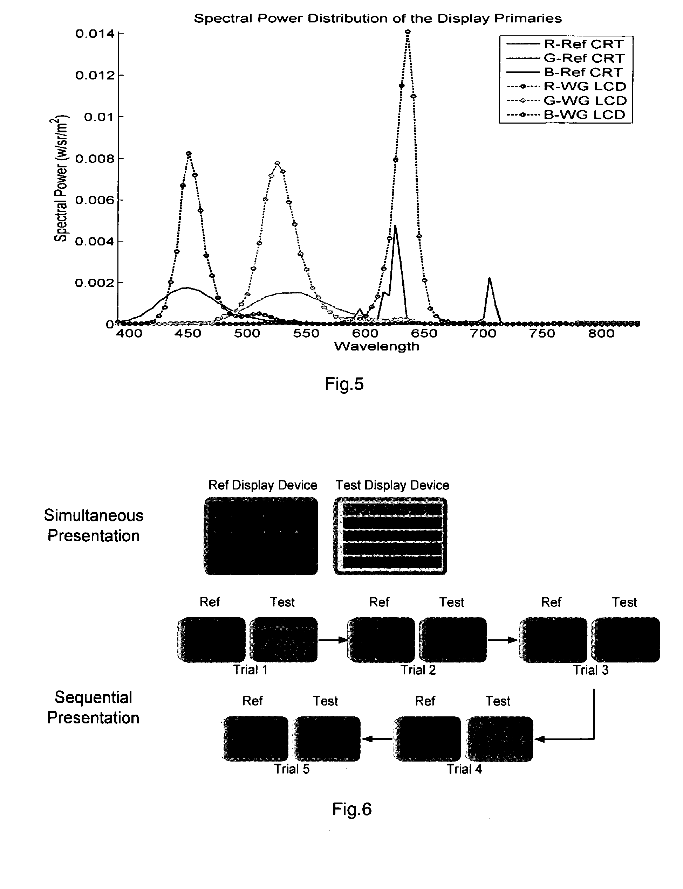

Spectral power distributions of the two displays are illustrated on figure 5, which shows that there is a significant difference between the spectral distribution of the primaries of the two image display devices, so that a colour match made on the two image display devices is highly metameric in nature, justifying the choice of these two image display devices for the observer classification. The LCD is representative of modern wide-gamut displays with peaky primaries. The CRT has a 10-bit HD/SDI input and the LCD has an 8-bit DVI input.

As a reference image display device and/or as a test image display device, any other image devices may also be used instead.

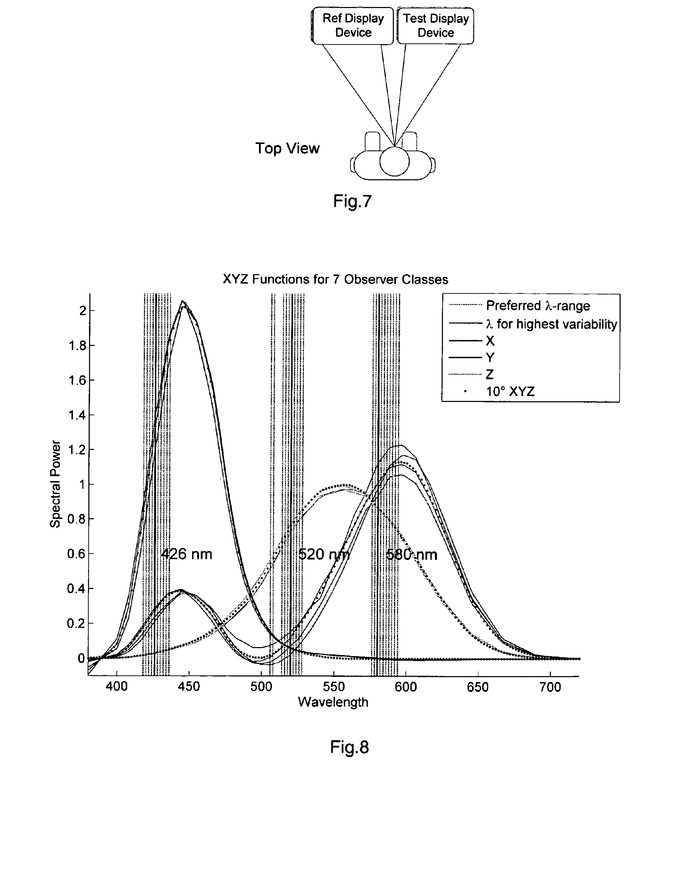

The screens of the reference image display device and of the test image display device were placed side to side as illustrated on figure 7.

Before performing the classification test, the two image display devices are characterized to know which spectral power distribution (SPD) can be obtained for any triplet (R,G,B) of control values applied to these image display devices.

For characterizing the image display devices for each set i of CMFs, a pair of forward colour transforms and reverse colour transforms are used for each set of CMFs. Using the above definitions of the set of CMFs of the standard observer that allow to compute tristimulus values $(X_0,Y_0,Z_0)$ from any spectral power distribution (SPD) of a color, or to compute the set of control values $(R_0,G_0,B_0)$ that are used to control the image display device to reproduce a color with tristimulus values $(X_0,Y_0,Z_0)$, representing this color as perceived by a standard observer, the two image display devices are then characterized separately for various observers such that :

- for the CRT, $(R,G,B)^R$ - $(T)^R_i$ -> $(X_0,Y_0,Z_0)$ , i.e. a forward colour transform $(T)^R_i$ for each set i of CMFs;
- for the LCD, $(R,G,B)^D$ - $(T)^D_i$ -> $(X_0,Y_0,Z_0)$ , a forward colour transform $(T)^D_i$ for each set i of CMFs.
- for the CRT, (SPD) -> $(X_0,Y_0,Z_0)$ -> $(T^{-1})^R_i$ -> $(R_i,G_i,B_i)^R$, i.e. a reverse colour transform $(T^{-1})^R_i$ for each set i of CMFs;
- for the LCD, (SPD) -> $(X_0,Y_0,Z_0)$ -> $(T^{-1})^D_i$ -> $(R_i,G_i,B_i)^D$, i.e. a reverse colour transform $(T^{-1})^D_i$ for each set i of CMFs.

From each set of control values $(R,G,B)^R$ and $(R,G,B)^D$, the spectral color distribution of displayed colors, $(SPD)^R_I$ and $(SPD)^D_i$, can be obtained using display characteristics.

Example of definition of a classification chart of colour patches :

In order to improve the efficiency of the classification method, the colour patches that produce the largest colour differences $(\Delta E^*_{00})$ between the seven classes of observers may be advantageously selected, from the 240 colour patches of the Colourchecker DC™ reference colour chart, such as to get an efficient classification chart of colour patches.

In the following discussion, a "Test colour" refers to a given Colourchecker patch $(CP)_n$ whose spectral reflectance data are known. From the reflectance data, 10° standard observer CMFs and $D_{65}$ illuminant spectral power distribution, tristimulus values $(X_0,Y_0,Z_0)$ are calculated. The reference display (e.g. CRT) inverse model gives a set of control signals (R,G,B) that generate each tristimulus values $(X_0,Y_0,Z_0)$. From this set of control signals, the spectral power distribution $(SPD)^R_n$ of the colour patch $(CP)_n$ displayed on the reference display can be predicted. Multiplying this spectral power distribution $(SPD)^R_n$ with the seven i=1 to 7 "reduced" x-, y-, z-CMF gives the predicted tristimulus values $(X_i,Y_i,Z_i)^R_n$ in each case. In other words, these seven sets of tristimulus values $(X_i,Y_i,Z_i)^R_n$ correspond to different colours as perceived by seven observers whose CMFs match these seven CMF sets. The same reasoning applies for the LCD with the predicted tristimulus values $(X_i,Y_i,Z_i)^D_n$ in each case.

Root-mean-square (rms) distances of each pair of $[(X_i,Y_i,Z_i)^R_n, (X_i,Y_i,Z_i)^D_n]$ tristimulus values signify how close the perceived colours of a given colour patch $(CP)_n$ are in terms of chromaticities for a given set i of CMFs. The variance (square of standard deviation) of these seven root-mean-square distances was used as a metric to determine how suitable is a colour patch for observer classification. High variance indicated more variability among the seven versions of the test colour.

Table 3 lists the first fifteen colour patches ("n" is the number of the colour patch CP as referenced in the reference colour chart) determined to be most suitable as test colours in the experimental setup for observer classification and forming a **classification chart** of colour patches. According to this determination, we found that these test colours are generally mostly different shades of green, green-yellow and blue-green and blue, but no or few shades of red are present.

Table 3

| Rank | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| "n" | 92 | 34 | 153 | 158 | 191 | 49 | 197 | 54 | 196 | 216 | 36 | 39 | 48 | 49 | 211 |

Example of classification test :

Figure 6 shows two variants of a block diagram of an embodiment of the observer calibration method, that uses the above defined seven sets of CMFs, each corresponding to a class of observers.

Given the spectral power distribution $(SPD)_n$ of the $n^{th}$ colour patch (out of a total of N colour patches in the classification chart), and the characterization data of the image display devices (see above), triplets (R,G,B) of control signals are computed in order to display the same colour as the colour given by this spectral power distribution $(SPD)_n$ such that:

- for the CRT : only one control signals triplet corresponding to the perception of the 1st class of observer : $(SPD)_n$ -> $(X_1,Y_1,Z_1)_n$ - $-(T^{-1})^R_1$ -> $(R_1,G_1,B_1)^R_n$;
- for the LCD : seven different control signals triplets corresponding to the perception of the seven classes of observers : $(SPD)_n$ -> $(X_i,Y_i,Z_i)_n$ $-(T^{-1})^D_i$ -> $(R_i,G_i,B_i)^D_n$ , for i=1 to 7.

Then, using the experimental setup as described above, each $(CP)_n$ of the 1 to N colour patches of the classification chart is successively displayed of both image display devices as follows:

- for the CRT, the whole screen will display the same colour obtained, by applying the same triplet $(R_1,G_1,B_1)^R_n$ of control signals over the whole screen;
- the screen of the LCD being divided into seven equal colour stripes, in each stripe is displayed with a different colour by applying respectively each of the seven different triplets $(R_i,G_i,B_i)^D_n$ of control signals.

Being seated before the mask of the experimental setup, the actual observer to classify is then asked to compare each i=1 to 7 of the coloured stripes displayed by the LCD with the coloured screen displayed by the CRT. The number i of the matching stripe is then registered as corresponding, for this specific colour patch $(CP)_n$, to the class i of the observer. In summary, one colour is displayed on the CRT and seven versions of the same colour are displayed on the LCD, one of which should ideally give the best match for a given observer. For example, an observer whose CMFs are closer to the set of CMFs of the first class than other set of CMFs, will find the 1st version (i.e. i=1) of the patch on LCD to be the closest match to the colour displayed on the CRT. Similarly, an observer whose CMFs to the set of CMFs of the second class than other set of CMFs, will find the 2nd version (i.e. i=2) to be the best match to the CRT colour, so on and so forth.

If the above simultaneous display of the different colour by applying respectively each of the seven different

triplets $(R_i,G_i,B_i)^D{}_n$ of control signals is an option illustrated on figure 6, another preferred option is also presented on figure 6 with the sequential display of these seven versions of the same colour patch on the LCD, i.e. seven consecutive trials, to finally get the same results concerning the closest match.

Based on observer's selections for each of the displayed colour patches of the classification chart, one of the seven classes of observer CMFs that best correspond to this observer can be identified as being the class to which this observer belongs.

An example of matching results is given in table 4 for a given observer : the line "match" gives the number i of the best matching stripe displayed by the LCD for the 15 colour patches selected in table 2. From this results, the given observer is classified in class 3 (i.e. i=3) and is considered as being characterized by the set of CMFs corresponding to this class.

Table 4

| CP:"n" | 137 | 136 | 147 | 115 | 170 | 117 | 169 | 171 | 144 | 134 | 127 | 135 | 118 | 116 | 113 |
|--------|-----|-----|-----|-----|-----|-----|-----|-----|-----|-----|-----|-----|-----|-----|-----|
| Match | 2 | 3 | 3 | 4 | 3 | 5 | 3 | 3 | 4 | 5 | 3 | 3 | 1 | 3 | 3 |

EP 2 375 230 A1

4<u>th</u> step : method for displaying images for an observer belonging to a specific class characterized by its set of CMFs.

Once a specific class is assigned to a given observer or, more generally, once a given observer is characterized by a set of CMFs by any method known in the art, the control of an image display device C that is used by this observer to watch images should be adapted according to the invention in order to allow this observer to perceive the displayed images as a standard observer would have perceived these images with a usual control of this image display device C.

An aim of the invention is then to calibrate an image display device for a specific observer so that colour matches for a given observer across image display devices having different sets of CMFs can be improved, and disagreement among observers on displayed colour matches can be minimized. Achieving this goal will ensure that all colour matches are more predictable for individual observers, in spite of the variability in their colour vision characteristics.

On one hand, the images to display are generally available in standardized format as, for instance, ITU-R BT. 709, such that the colours associated with each pixel of such images are expressed, for instance, in the YUV colour space, from which they may be converted, in a manner known per se, in a linear device-dependent RGB colour space and then in the linear device-independent CIE XYZ colour space. In summary, each pixel $P_n$ of an image can be represented by a trichromatic stimulus $(X_0, Y_0, Z_0)_n$ which corresponds to the perception of the colour of this pixel by a CIE standard observer. A wavelength-wise spectral power distribution $(SPD)_n$ can be associated with this trichromatic stimulus $(X_0, Y_0, Z_0)_n$ such that the following relations are met:

$$X_0 = \sum_\lambda SPD_n x_0(\lambda)\Delta\lambda; \quad Y_0 = \sum_\lambda SPD_n y_0(\lambda)\Delta\lambda; \quad Z_0 = \sum_\lambda SPD_n z_0(\lambda)\Delta\lambda$$

where $[x_0(\lambda), y_0(\lambda), z_0(\lambda)]$ is the set of CMFs of the standard observer.

For each class of observers characterized with its "reduced" set of CMFs $X_{Red-CMF}$, $Y_{Red-CMF}$, $Z_{Red-CMF}$, this tristimulus values $(X_0, Y_0, Z_0)_n$ are then transformed to tristimulus values $(X_i, Y_i, Z_i)_n$ through a 3x3 transformation matrix as explained below. It is assumed that simple, linear transformations exist between the color space with 10° standard observer and any color space with a "reduced" set of CMFs.

Seven transformation matrices $M_{3X3}$ were computed using the 10° standard observer and each of the reduced set of 7 CMFs, as per the formula ("SO" means "Standard Observer":

$$\begin{bmatrix} \bar{x}_{Red.CMF} \\ \bar{y}_{Red.CMF} \\ \bar{z}_{Red.CMF} \end{bmatrix} = M_{3x3} \begin{bmatrix} \bar{x}_{10°SO} \\ \bar{y}_{10°SO} \\ \bar{z}_{10°SO} \end{bmatrix}$$

These matrices were tested with two different datasets to verify the accuracy. The first was the 240 ColorChecker DC™ (CCDC) samples. X,Y,Z tristimulus values for the samples were computed directly using the seven reduced sets, and was also computed using 10° standard observer and the above transformation matrices. Then, average Root Mean Square chromaticity errors were computed as follows:

$$Err_{RMS} = \sqrt{(x_{Red.CMF} - x_{10°SO})^2 + (y_{Red.CMF} - y_{10°SO})^2}$$

In the second method, instead of the ColorChecker DC™ (CCDC) samples, spectral power distributions of nine arbitrary color samples shown on the HP Dreamcolor LCD test display device were used.

Following errors were obtained for the seven CMFs: see table 5.

Table 5

| Data Set | Mean xy RMS chromaticity error: Using CMFs to compute 3x3 | | | | | | |
|---|---|---|---|---|---|---|---|
| | CMF-1 | CMF-2 | CMF-3 | CMF-4 | CMF-5 | CMF-6 | CMF-7 |
| CCDC | 0.0021 | 0.0025 | 0.002 | 0.0015 | 0.0044 | 0.0017 | 0.0027 |
| LCD SPDs | 0.006 | 0.0018 | 0.0034 | 0.0008 | 0.0117 | 0.0046 | 0.0086 |

| Data Set | Mean xy RMS chromaticity error: Using CCDC XYZ values to compute 3x3 | | | | | | |
|---|---|---|---|---|---|---|---|
| | CMF-1 | CMF-2 | CMF-3 | CMF-4 | CMF-5 | CMF-6 | CMF-7 |
| CCDC | 0.0008 | 0.0008 | 0.0009 | 0.0005 | 0.0017 | 0.0009 | 0.0013 |
| LCD SPDs | 0.0056 | 0.0028 | 0.0041 | 0.0014 | 0.0083 | 0.005 | 0.0066 |

In the second case, errors for CCDC are supposed to be low, since the same data set is used for deriving the 3x3 matrices. For LCD SPDs, results are similar with two datasets. Thus, the first method, where the CMFs are used to compute the transformation matrices, is preferred as no additional data are required for the computation.

In table 6 below, the seven transformation matrices, now called $(M)_{0->i}$ for a transformation of any trichromatic stimulus $(X_0,Y_0,Z_0)$ representing the perception of a colour by a CIE standard observer into a trichromatic stimulus $(X_i, Y_i, Z_i)$ representing the perception of the same colour by an observer characterized by a set of CMFs corresponding to the class i of observers, are defined.

Therefore, each pixel $P_n$ of an image, which can be represented, as defined above, by a trichromatic stimulus $(X_0,Y_0,Z_0)_n$ representing the perception of the colour of this pixel by a CIE standard observer, can also be represented by another trichromatic stimulus $(X_i,y_i,Z_i)_n$ representing the perception of the same pixel by an observer characterized by another set of CMFs $[x_i(\lambda), y_i(\lambda), z_i(\lambda)]$, such that the following relations are met:

$$X_i = \sum_{\lambda} SPD_n x_i(\lambda)\Delta\lambda; \quad Y_i = \sum_{\lambda} SPD_n y_i(\lambda)\Delta\lambda; \quad Z_i = \sum_{\lambda} SPD_n z_i(\lambda)\Delta\lambda$$

where $(SPD)_n$ is the same wavelength-wise spectral power distribution as defined above in connection with the definition of $(X_0,Y_0,Z_0)_n$.

Table 6

| | | | |
|---|---|---|---|
| $(M)_{0->1}$ | 1.0417 | 0.0303 | -0.0083 |
| | -0.0121 | 1.0105 | 0.0042 |
| | -0.028 | 0.0307 | 0.9799 |
| $(M)_{0->2}$ | 0.9958 | 0.0015 | -0.0054 |
| | -0.0121 | 1.0105 | 0.0042 |
| | -0.0074 | 0.0117 | 1.0052 |
| $(M)_{0->3}$ | 1.0417 | 0.0303 | -0.0083 |
| | 0.0147 | 0.9621 | -0.0056 |
| | -0.028 | 0.0307 | 0.9799 |
| $(M)_{0->4}$ | 0.9765 | -0.0611 | 0.0084 |
| | 0.0147 | 0.9621 | -0.0056 |
| | -0.0074 | 0.0117 | 1.0052 |
| $(M)_{0->5}$ | 1.1219 | -0.1611 | -0.0208 |
| | 0.0147 | 0.9621 | -0.0056 |
| | 0.0086 | -0.0067 | 0.9874 |
| $(M)_{0->6}$ | 1.0417 | 0.0303 | -0.0083 |
| | 0.0393 | 0.9446 | -0.0106 |
| | -0.028 | 0.0307 | 0.9799 |

(continued)

| | | | |
|---|---|---|---|
| $(M)_{0\to7}$ | 1.1219 | -0.1611 | -0.0208 |
| | -0.0121 | 1.0105 | 0.0042 |
| | 0.0086 | -0.0067 | 0.9874 |

On the other hand, the image display device C to calibrate is characterized such that a relationship can be established between any trichromatic stimulus $(X_i, Y_i, Z_i)$ for any given observer of a class i and any triplet $(R,G,B)_C$ of control signals applied to this image display device as follows:

- $(R_0,G_0,B_0)^C$ - $(T)^c_0$ -> $(X_0, Y_0, Z_0)$, i.e. a forward colour transform $(T)^c_0$ for the standard observer ;
- $(X_i, Y_i, Z_i)$ - $(T^{-1})^C_i$ -> $(R_i,G_i,B_i)^C$ , i.e. a inverse colour transform $(T^{-1})^C_i$ for each set i of CMFs corresponding to each class (i= 1 to 7) of observer.

Therefore, in order to ensure that any observer characterized with a given set of CMFs $[x_i(\lambda), y_i(\lambda), z_i(\lambda)]$ will perceive a colour displayed by this image display device C as a standard observer would have perceived this colour if a colour signal $(R_0,G_0,B_0)^C$ would have been applied to control this image display device C, the colour signal $(R_i,G_i,B_i)^C$ as calculated below should be applied to control this image display device C :

1) $(R_0,G_0,B_0)^C$ -$(T)^C_0$ -> $(X_0, Y_0, Z_0)$,

2) $(X_i, Y_i, Z_i) = (M)_{0\to i} (X_0, Y_0, Z_0)$, using the matrices as defined above.

3) $(X_i\ Y_i, Z_i)$ -$(T^{-1})^C_i$ -> $(R_i,G_i,B_i)^C$ .

Such a process is represented in figure 9. In step 1, the input image given in the linear RGB color space is converted to an image in the linear CIE-XYZ color space using a forward transform based on the display profile, as routinely done in most colour management workflows. This XYZ image is based on 2˚ or 10˚ standard observer and is a device-independent colour representation. If step 1 is skipped, this process starts directly from the XYZ image as perceived by the standard observer. All colour transforms may be lookup tables. Thanks to the invention, $(R_i,G_i,B_i)^C$ control signals corresponding to any specific observer CMFs can be obtained. This is called the observer-specific output image. The display inverse colour transforms $(T^{-1})^C_i$ will generally be pre-computed for each of the seven sets of CMFs discussed above, when each set may correspond to a specific class of observers.

By controlling the image display device C that is used by the observer according to the above method, this observer can now perceive the images displayed by this image display device C as a standard observer would have perceived these images with a usual control of this image display device C.

More generally, this invention will enable a large range of observers having large variations of CMFs to have very similar perception of colours, allowing true comparison of these perceptions.

This method for observer calibration can be advantageously exploited for improving colour matches for a given observer across image display devices with different spectral characteristics, and for reducing disagreement among individual observers on colour matches. An image display device that employs observer calibration can be easily configured to switch from one observer to the other by the push of a button, much like any other configurable colour parameters like gamma, colour temperature etc. that are available in most good-quality image display devices.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skilled in the art. It is to be understood that the invention may be implemented in various forms of hardware, software, firmware, special purpose processors, or combinations thereof.

**Claims**

1. Method for displaying a second image of colours using a second set of primaries for a second observer visually **characterized by** a second set of Colour Matching Functions $(CMFs)_i$, each colour being delivered as a first set of colour coordinates $(R_0,G_0,B_0)^R$ allowing to display a first image of said colour by using a first set of primaries, said first displayed image allowing the perception of said colour by a first observer visually **characterized by** a first set of Colour Matching Functions $(CMFs)_0$ different from said second set of Colour Matching Functions $(CMFs)_i$, said

method comprising,

1) for each colour delivered as a first set of colour coordinates $(R_0,G_0,B_0)^R$, the following steps:

- converting said first set of colour coordinates $(R_0,G_0,B_0)^R$ of said colour into a first set of visual tristimulus values $(X_0,Y_0,Z_0)$ representing said colour as perceived by said first observer when displayed using said first set of primaries,
- converting said first set of visual tristimulus values $(X_0,Y_0,Z_0)$ into a second set of visual tristimulus values $(X_i,Y_i, Z_i)$ representing the same colour as perceived by said second observer,
- converting said second set of visual tristimulus values $(X_i,Y_i, Z_i)$ into a second set of colour coordinates $(R_i,G_i,B_i)^C$ representing said colour as perceived by said second observer when displayed using said second set of primaries,

2) displaying said second image of colours by controlling said second set of primaries using said second sets of colour coordinates $(R_i,G_i,B_i)^C$ representing said colours as perceived by said second observer.

**2.** Method for displaying images of colours according to claim 1, wherein said second observer is assigned to a class (Cl-i) of observers, said class being **characterized by** said second set of Colour Matching Functions (CMFs)$_i$.

1964 10° Standard Observer

Fig.1

Reduced Set of 7 Optimal Observers: x- CMFs

Fig.2

Reduced Set of 7 Optimal Observers: y- CMFs

Fig.3

Reduced Set of 7 Optimal Observers: z- CMFs

Fig.4

Fig.5

Fig.6

Top View

Fig.7

XYZ Functions for 7 Observer Classes

Legend:
- ............ Preferred λ-range
- —— λ for highest variability
- —— X
- —— Y
- ....... Z
- · 10° XYZ

426 nm   520 nm   580 nm

Spectral Power (y-axis)
Wavelength (x-axis): 400, 450, 500, 550, 600, 650, 700

Fig.8

Display/System
Profile

Display/System
Profile

| (R₀,G₀,B₀)ᶜ Input Image | Forward Transform $(T)^{C_0}$ | $X_0, Y_0, Z_0$ | $X_i, Y_i, Z_i$ | Inverse Transform $(T^{-1})^{C_i}$ | (Rᵢ,Gᵢ,Bᵢ)ᶜ Output Image |

Fig.9

Europäisches
Patentamt

European
Patent Office

Office européen
des brevets

## EUROPEAN SEARCH REPORT

Application Number

EP 10 29 0194

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KÖNIG F ET AL: "Multiprimary display: discounting observer metamerism" PROC. SPIE, vol. 4421, 9 October 2003 (2003-10-09), pages 898-901, XP002594655 * the whole document * ----- | 1,2 | INV. G01J3/46 |
| X | MASAHIRO YAMAGUCHI ET AL: "Color image reproduction based on the multispectral and multispectral and multiprimary imaging: Experimental evaluation" PROCEEDINGS OF THE INTERNATIONAL SOCIETY FOR OPTICAL ENGINEERING (SPIE), SPIE, USA, vol. 4663, 1 January 2002 (2002-01-01), pages 15-26, XP002311068 ISSN: 0277-786X * page 24 - page 25 * ----- | 1,2 | |
| A | MURAKAMI Y ET AL: "Color conversion method for multi-primary display for spectral color reproduction" J ELECTRON IMAGING, vol. 13, 30 September 2004 (2004-09-30), pages 701-708, XP002594656 * the whole document * ----- | 1,2 | TECHNICAL FIELDS SEARCHED (IPC) G01J G09G |
| A | RAMANATH R: "Minimizing observer metamerism in display systems" COLOUR RESEACH AND APPLICATION, vol. 34, no. 5, 4 August 2009 (2009-08-04), pages 391-398, XP002594590 * the whole document * ----- | 1,2 | |
| A | BERGQUIST J: "52.2: Display with Arbitrary Primary Spectra" SID SYMPOSIUM DIGEST OF TECHNICAL PAPERS, vol. 39, no. 1, May 2008 (2008-05), pages 783-786, XP002594657 * the whole document * ----- | 1,2 | |

The present search report has been drawn up for all claims

| Place of search | Date of completion of the search | Examiner |
|---|---|---|
| Munich | 30 July 2010 | Besser, Veronika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAMANATH R.** Minimizing Observer Metamerism in Display System. *Colour Res. & Appl.,* 2009, vol. 34 (5), 391-398
- **FAIRCHILD M. D. ; WYBLE D. R.** Mean Observer Metamerism and the Selection of Display Primaries. *Final Program and Proceedings-IS&T/SID Colour Imaging Conference,* 2007, 151-156

- **SARKAR A. ; BLONDÉ L. ; LE CALLET P. ; AUTRUSSEAU F. ; STAUDER J. ; MORVAN P.** Study of Observer Variability on Modern Display Colourimetry: Comparison of CIE 2006 Model and 10˚ Standard Observer. *Final Program and Proceedings, The 11th Congress of the International Colour Association,* 2009